# EUROPEAN PATENT APPLICATION

(11) **EP 2 033 850 A2**
(43) Date of publication of application: **11.03.2009**
(21) Application number: 08009978.1
(22) Date of filing: 30.05.2008
(51) Int. Cl.: B60R 21/203

(54) **Driver-seat airbag, driver-seat airbag device, and steering apparatus**

(30) Priority: 07.09.2007 JP 2007232892
(71) Applicant: Takata Corporation, Tokyo 106-8510 (JP)
(72) Inventor: Abe, Kazuhiro, Tokyo 106-8510 (JP); Arroyo, Carmen, Tokyo 106-8510 (JP)
(74) Representative: Banzer, Hans-Jörg

(57) **Abstract**

In.order to provide a driver-seat airbag (10) that can be inflated quickly without the use of a high output inflator and without being reduced in size in the diameter direction of a steering wheel (1) when the airbag (10) is completely inflated, inside the airbag (10), a tether (50) is connected to sections of a rear panel (14) that are near an inflator-insertion opening (16). The tether (50) extends across the inside of the airbag (10) so as to link these sections of the rear panel (14) near the inflator-insertion opening (16) to each other. When the airbag (10) inflates, an area of the rear panel (14) that is at a non-occupant side relative to an occupant-facing surface (1e) of the steering wheel (1) is pulled towards the inside of the airbag (10) by the tether (50), whereby the airbag (10) becomes reduced in volume.

## Description

### Technical Field

The present invention relates to a driver-seat airbag that is quickly inflatable by being reduced in volume at the time of inflation. The present invention also relates to a driver-seat airbag device equipped with such a driver-seat airbag, and to a steering apparatus including a steering wheel equipped with such a driver-seat airbag device.

### Background Art

A driver-seat airbag has a front face at an occupant side and a rear face at a steering-wheel side. The central area of the rear face is provided with an inflator-insertion opening. With the driver-seat airbag in a folded state, the periphery of the inflator-insertion opening in the rear face is attached to an airbag attachment member. When gas released from an inflator enters the airbag through this inflator-insertion opening, the airbag inflates. The folded body of the driver-seat airbag has attached thereto and is covered with a module cover, thereby forming a driver-seat airbag device.

A steering wheel has a central portion linked to a steering shaft, a ring portion surrounding the central portion, and spoke portions that connect the central portion and the ring portion. Areas free of the spoke portions between the central portion and the ring portion define openings through which the occupant side and the non-occupant side of the steering wheel spatially communicate with each other.

The driver-seat airbag device is disposed at the occupant side of the central portion of this steering wheel, and the airbag attachment member is connected to the central portion, thereby forming a steering apparatus.

The central portion of the steering wheel is positioned on the non-occupant side relative to an occupant-facing surface of the ring portion. The airbag attachment member connected to the central portion is also disposed on the non-occupant side relative to the occupant-facing surface of the ring portion. Therefore, when the driver-seat airbag is in an inflated state, an area of the rear face that is near the inflator-insertion opening with the airbag attachment member attached thereto is located at the non-occupant side relative to the occupant-facing surface of the steering wheel.

Japanese Unexamined Patent Application Publication No. 2002-46568 discloses an airbag whose outer periphery sections are linked to each other with a tether. When the airbag inflates, the tether pulls the outer periphery sections of the airbag towards the inside of the airbag so as to reduce the volume of the airbag. Therefore, the airbag can be inflated quickly without the use of a high output inflator.

### Disclosure of the Invention Problems to be Solved by the Invention

In the airbag disclosed in Japanese Unexamined Patent Application Publication No. 2002-46568, since the outer periphery sections of the airbag are pulled towards the inside of the airbag at the time of inflation, the airbag in its completely inflated state unfavorably becomes small in size in the diameter direction of the steering wheel.

Accordingly; an object of the present invention is to provide a driver-seat airbag that can be inflated quickly without the use of a high output inflator and without being reduced in size in the diameter direction of a steering wheel when the airbag is completely inflated.

Another object of the present invention is to provide a driver-seat airbag device having such a driver-seat airbag, and to provide a steering apparatus including a steering wheel equipped with such a driver-seat airbag device.

### Means for Solving the Problems

According to the invention, these objects are achieved by a driver-seat airbag as defined in claim 1, a driver-seat airbag device as defined in claim 9 and a steering apparatus as defined in claim 10. The dependent claims define preferred and advantageous embodiments of the present invention.

A driver-seat airbag according to the present invention has a front face at an occupant side and a rear face at a steering-wheel side. The rear face has an inflator-insertion opening in a central area thereof. A tether is connected to an area of the rear face that is near the inflator-insertion opening. When the airbag inflates, the tether pulls a non-occupant side of the rear face, relative to an occupant-facing surface of the steering wheel, towards an inside of the airbag so as to reduce a volume of the airbag.

According to the driver-seat airbag of the invention, the tether is preferably connected to the rear face within a radius range of 100 mm to 175 mm from an axis of the steering wheel in the state where the airbag is inflated.

According to the invention, the area of the rear face to which the tether is connected preferably overlaps an opening of the steering wheel in the state where the airbag is inflated.

The tether preferably links sections of the rear face to each other, the sections of the rear face being located at the non-occupant side relative to the occupant-facing surface of the steering wheel in the state where the airbag is inflated.

According to the driver-seat airbag of the invention, the tether preferably extends in a diameter direction of the steering wheel. In addition, a length L between opposite ends of the tether is preferably 30% to 70% of a distance D between a connection point between one of the opposite ends of the tether and the rear face and a connection point between the other one of the opposite ends of the tether and the rear face in a state where the rear face is laid flat.

According to the invention, the tether preferably extends crosswise in two directions.

The tether preferably links the front face to the area of the rear face that is to be located at the non-occupant side relative to the occupant-facing surface of the steering wheel when the airbag is inflated.

Thereby, the tether is preferably connected to the front face in an area outside a radius range W of 250 mm to 275 mm from a center of the front face.

A driver-seat airbag device according to the present invention includes the driver-seat airbag according the invention in a folded state; an airbag attachment member to which a periphery of the inflator-insertion opening in the rear face of the driver-seat airbag is attached; an inflator that inflates the driver-seat airbag; and a module cover that covers a folded body of the driver-seat airbag.

A steering apparatus according to the present invention includes a steering wheel equipped with the driver-seat airbag device according to the invention. In the steering apparatus, the airbag attachment member is disposed at the non-occupant side relative to the occupant-facing surface of the steering wheel.

### Advantages

In the driver-seat airbag according to the present invention, the driver-seat airbag device according to the present invention, and the steering apparatus according to the present invention, the tether pulls the non-occupant side of the rear face, relative to the occupant-facing surface of the steering wheel, towards the inside of the airbag at the time of inflation so as to reduce the volume of the driver-seat airbag. Therefore, without using a high output inflator, the driver-seat airbag can be inflated quickly in response to gas from an inflator.

In addition, the occupant side of the driver-seat airbag relative to the occupant-facing surface of the steering wheel is not or hardly pulled towards the inside of the airbag by the tether. This allows for volume reduction of the driver-seat airbag without reducing the size of the airbag in the diameter direction of the steering wheel when the airbag is in its completely inflated state. Thus, the driver-seat airbag can be deployed quickly over a wide range.

As mentioned above, the tether is preferably connected to the rear face of the driver-seat airbag within a range of 100 mm to 175 mm radially from an axis of the steering wheel in the state where the airbag is inflated.

Accordingly, when the driver-seat airbag is inflated, an inward area of the rear face relative to the ring portion of the steering wheel is pulled towards the inside of the airbag. In the inflated state of the driver-seat airbag, this inward area of the rear face relative to the ring portion of the steering wheel is located at the non-occupant side relative to the occupant-facing surface of the steering wheel. Therefore, when the driver-seat airbag is inflated, the driver-seat airbag can be reduced in volume while the occupant side of the driver-seat airbag relative to the occupant-facing surface of the steering wheel is not or hardly pulled towards the inside of the airbag.

In the present invention, as described above, the area of the rear face to which the tether is connected preferably overlaps an opening of the steering wheel in the state where the airbag is inflated. Accordingly, this prevents the rear face from bulging outward of the airbag by pushing itself into the opening of the steering wheel as the driver-seat airbag inflates, whereby the driver-seat airbag can be effectively reduced in volume.

According to the invention, the tether is preferably not connected to the front face of the driver-seat airbag. Therefore, when the driver-seat airbag inflates, the front face can be entirely deployed quickly and substantially evenly towards the occupant side.

In this case, the tether may extend in the diameter direction of the steering wheel. Moreover, as set forth above, the length L between the opposite ends of the tether is preferably 30% to 70% of the distance D between the connection point between one of the opposite ends of the tether and the rear face and the connection point between the other one of the opposite ends of the tether and the rear face in a state where the rear face is laid flat.

As mentioned before, the tether may extend crosswise in two directions. However, in the present invention, the tether is not limited to this shape. For example, the tether may extend linearly or may extend radially in three directions or in five or more directions.

In the present invention, the tether may link the front face of the driver-seat airbag to the area of the rear face that is to be located at the non-occupant side relative to the occupant-facing surface of the steering wheel when the airbag is inflated.

In this case, as set forth above, the tether is preferably connected to the front face in an area outside a radius range W of 250 mm to 275 mm from the center of the front face. Accordingly, when the driver-seat airbag inflates, the wide range W surrounding the center of the front face can be deployed quickly and substantially evenly towards the occupant side without being restrained by the tether.

### Best Mode for Carrying Out the Invention

Embodiments of the present invention will now be described with reference to the drawings.

### Brief Description of the Drawings

Fig. 1 includes a front view (a) of a steering apparatus including a steering wheel equipped with a driver-seat airbag device having a driver-seat airbag according to an embodiment, and a front view (b) showing the airbag of the steering apparatus shown in view (a) in an inflated state.
Fig. 2 is a cross-sectional view taken along line II-II in Fig. 1(b).
Fig. 3 is an exploded perspective view of the driver-seat airbag and the driver-seat airbag device shown in Fig. 1.
Fig. 4 is an exploded view of a rear panel and a tether included in the driver-seat airbag shown in Fig. 1.
Fig. 5 is an exploded view of a tether according to an embodiment.
Fig. 6 is a cross-sectional view of a steering apparatus including a steering wheel equipped with a driver-seat airbag device having a driver-seat airbag according to an embodiment.

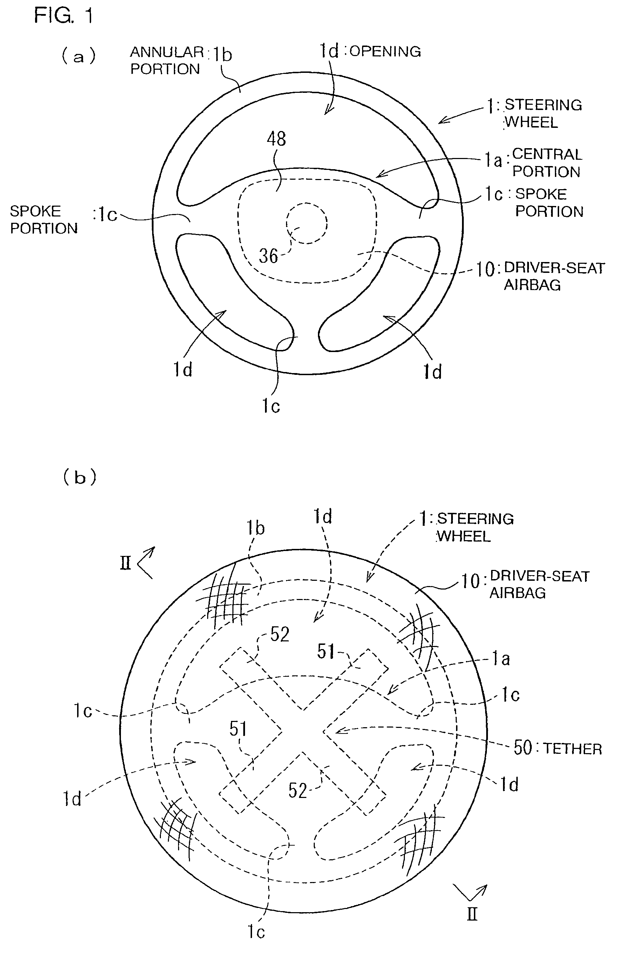

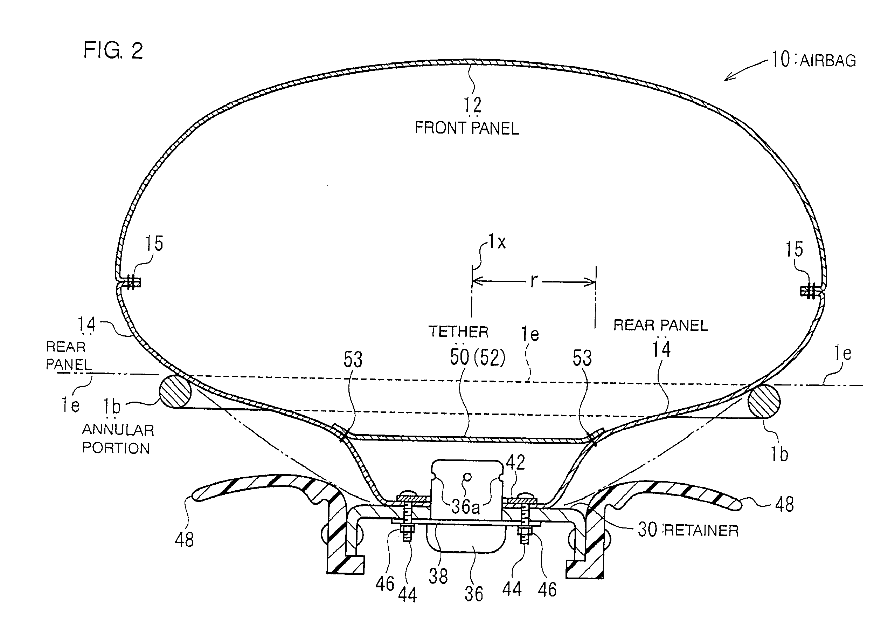

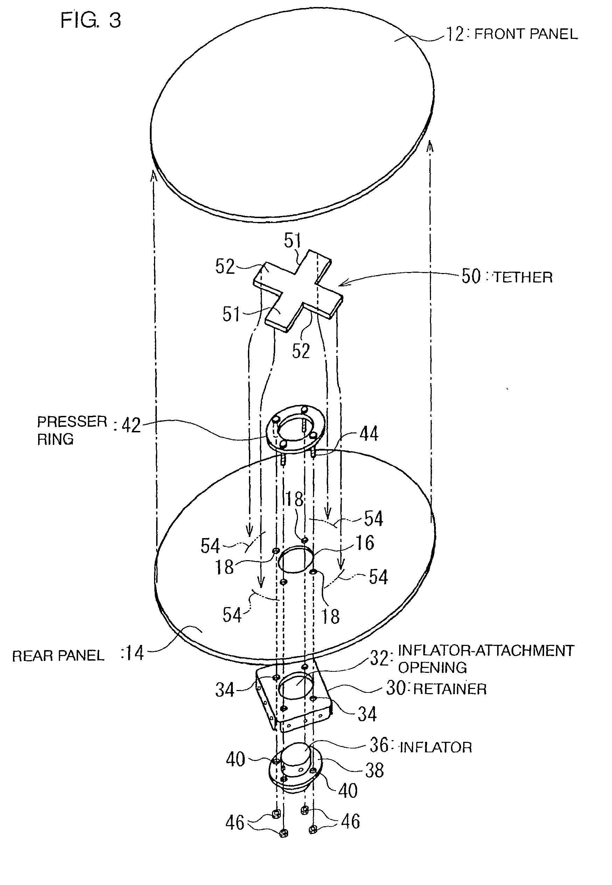

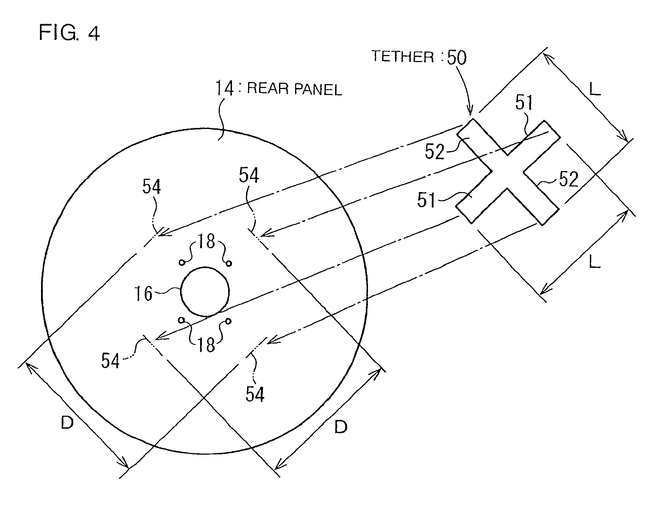

Fig. 1(a) is a front view of a steering apparatus including a steering wheel equipped with a driver-seat airbag device having a driver-seat airbag according to an embodiment. Fig. 1(b) is a front view showing the airbag of the steering apparatus in an inflated state. Fig. 2 is a cross-sectional view taken along line II-II in Fig. 1(b). Fig. 3 is an exploded perspective view of the driver-seat airbag and the driver-seat airbag device. Fig. 4 is an exploded view of a rear panel and a tether included in the driver-seat airbag.

In the following description, the vertical and horizontal directions respectively correspond to vertical and horizontal directions of the steering wheel when the steering wheel is viewed in the forward moving direction of the vehicle.

A driver-seat airbag (which may sometimes be simply referred to as an "airbag" hereinafter) 10 in a folded state is attached to a retainer 30 serving as an airbag attachment member, and is inflatable by means of an inflator 36. The folded body of this airbag 10 has attached thereto and is covered with a module cover 48. Consequently, this forms a driver-seat airbag device (which may sometimes be simply referred to as an "airbag device" hereinafter).

A steering wheel 1 has a central portion 1a linked to a steering shaft (not shown), a ring portion 1b surrounding the central portion 1a, and spoke portions 1c that connect the central portion 1a and the ring portion 1b. In this embodiment, a total of three spoke portions 1c extend leftward, rightward, and downward from the central portion 1a, respectively. Each spoke portion 1c has an end in the extending direction thereof that is connected to an inner periphery of a corresponding one of left, right, and lower positions of the ring portion 1b. Areas free of the spoke portions 1c between the central portion 1a and the ring portion 1b define openings 1d through which the occupant side and the non-occupant side of the steering wheel 1 spatially communicate with each other.

The airbag device is disposed at the occupant side of the central portion 1a of the steering wheel 1, and the retainer 30 is linked to the central portion 1a, thereby forming a steering apparatus.

The central portion 1a of the steering wheel 1 is positioned on the non-occupant side relative to an occupant-facing surface 1e (Fig. 2) of the ring portion 1b by an amount corresponding to the thickness of the driver-seat airbag device. Similarly, as shown in Fig. 2, the retainer 30 linked to the central portion 1a is disposed on the non-occupant side relative to the occupant-facing surface 1e of the ring portion 1b of the steering wheel 1.

The driver-seat airbag 10 has a front panel 12 defining a front face proximate to the occupant at the time of inflation and a rear panel 14 defining a rear face proximate to the steering wheel 1 at the time of inflation, the front panel 12 and the rear panel 14 being joined to each other by, for example, sewing along the edges thereof so as to form a shape of a bag. Reference numeral 15 denotes a seam formed as a result of sewing. As shown in Figs. 1(b) and 2, the front panel 12 and the rear panel 14 are formed of substantially circular cloths with a diameter larger than that of the ring portion 1b of the steering wheel 1.

A central area of the rear panel 14 is provided with an inflator-insertion opening 16 through which the inflator 36 extends. Around the inflator-insertion opening 16 are arranged bolt through holes 18 through which bolts 44 are inserted for fixing the rear panel 14 to the retainer 30.

Inside the airbag 10, an area of the rear panel 14 that is near the inflator-insertion opening 16 has connected thereto a tether 50 for pulling the rear panel 14 towards the inside of the airbag 10 at the time of inflation of the airbag 10 to reduce the volume of the airbag 10.

Referring to Figs. 1(b), 3, and 4, in this embodiment, the tether 50 substantially has a shape of a cross so as to extend crosswise in two directions. In the description hereinafter, one segment of the cross-shaped tether 50 that extends in one of the two directions will be referred to as a first-direction-extending segment 51, whereas the other segment extending in the other one of the two directions will be referred to as a second-direction-extending segment 52. The two segments may sometimes be collectively referred to as extending segments 51 and 52.

Referring to Fig. 4, in this embodiment, the first-direction-extending segment 51 and the second-direction-extending segment 52 have substantially the same end-to-end length L. The first-direction-extending segment 51 and the second-direction-extending segment 52 intersect with each other at a substantially right angle at longitudinally intermediate sections thereof. Alternatively, the first-direction-extending segment 51 and the second-direction-extending segment 52 may have different lengths. The length from the intersection of the first-direction-extending segment 51 and the second-direction-extending segment 52 to the opposite ends thereof may all be the same or be different from each other. The intersection angle between the first-direction-extending segment 51 and the second-direction-extending segment 52 may be an angle other than a substantially right angle.

Referring to Fig. 1(b), in this embodiment, the first-direction-extending segment 51 traverses the inflator-insertion opening 16 from the upper right to the lower left within the airbag 10 when inflated, whereas the second-direction-extending segment 52 traverses the inflator-insertion opening 16 from the upper left to the lower right within the airbag 10 when inflated. The opposite ends of each of the extending segments 51 and 52 are joined to corresponding locations of the rear panel 14 near the opening 16 and are positioned opposite to each other across the opening 16.

Reference numeral 53 in Fig. 2 denotes seams at which the opposite ends of each extending segment 51, 52 are sewn to the rear panel 14. Double-dotted chain lines 54 in Figs. 3 and 4 indicate planned tether sewing sections of the rear panel 14, to which the opposite ends of each extending segment 51, 52 are to be sewn with the corresponding seams 53. The technique for joining the tether 50 (i.e. the opposite ends of each extending segment 51, 52) onto the rear panel 14 is not limited to the aforementioned sewing technique, and other various joining techniques may be applied, such as a bonding technique or a welding technique.

As shown in Fig. 2, in the present invention, the tether 50 (i.e. the opposite ends of each extending segment 51, 52) is preferably joined to the rear panel 14 within a radius range r of 100 mm to 175 mm from an axis 1x of the steering wheel 1 (i.e. the axis of the steering shaft) in the state where the airbag 10 is inflated.

Furthermore, as shown in Fig. 1(b), in the present invention, the tether 50 (i.e. the opposite ends of each extending segment 51, 52) is preferably joined to sections of the rear panel 14 where the tether 50 overlaps the openings 1d of the steering wheel 1 when the airbag 10 is inflated.

As shown in Fig. 4, it is needless to say that, in a state where the rear panel 14 is laid flat, the length L between the opposite ends of each extending segment 51, 52 (which will simply be referred to as "the length of each extending segment 51, 52" hereinafter) is smaller than a distance D between the corresponding planned tether sewing sections 54, 54 positioned opposite to each other across the inflator-insertion opening 16. In the present invention, it is preferable that the length L of each extending segment 51, 52 be 30% to 70% of the distance D between the corresponding planned tether sewing sections 54, 54 positioned opposite to each other across the opening 16.

The retainer 30 to which the airbag 10 is attached has an inflator-attachment opening 32 in the center thereof, and also has bolt through holes 34 that surround the inflator-attachment opening 32.

The inflator 36 is substantially columnar and has gas outlets 36a on a periphery surface thereof and near one end thereof in the axial direction. The inflator 36 is configured to discharge gas radially from these gas outlets 36a. A flange 38 for fixing the inflator 36 extends from an axially intermediate position of the periphery surface of the inflator 36 (the intermediate position being closer towards the rear end of the inflator 36 relative to the gas outlets 36a). The flange 38 is provided with bolt through holes 40. The one end of the inflator 36 is fitted in the inflator-attachment opening 32.

When attaching the airbag 10 to the retainer 30, the periphery of the inflator-insertion opening 16 of the rear panel 14 is first aligned with the periphery of the inflator-attachment opening 32 of the retainer 30 from the occupant side of the retainer 30. Then, the stud bolts 44 of a presser ring 42 are inserted through the bolt through holes 18, 34, and 40 of the rear panel 14, the retainer 30, and the flange 38, respectively. By fastening nuts 46 to the ends of the bolts 44, the rear panel 14 and the inflator 36 become fixed to the retainer 30.

Subsequently, the airbag 10 is folded, and the module cover 48 is attached to the retainer 30 such that the module cover 48 covers the folded body of the airbag 10, thereby forming the driver-seat airbag device. Alternatively, the airbag 10 may be preliminarily folded prior to attaching the airbag 10 to the retainer 30.

With the module cover 48 at the occupant side and the retainer 30 at the steering wheel 1 side, the driver-seat airbag device is disposed at the occupant side of the central portion 1a of the steering wheel 1, and the retainer 30 is linked to the central portion 1a via a bracket (not shown).

Operation of the steering apparatus equipped with the airbag device having the driver-seat airbag 10 will now be described.

When a vehicle equipped with this steering apparatus is involved in a collision, the inflator 36 is actuated and discharges gas. The gas from the inflator 36 causes the airbag 10 to start to inflate. The airbag 10 pushes open the module cover 48 so as to expand towards the occupant side of the steering wheel 1. The airbag 10 inflates until the outer periphery thereof extends outward beyond the ring portion 1b of the steering wheel 1.

Referring to Fig. 2, when the airbag 10 inflates, an area of the rear panel 14 that is near the inflator-insertion opening 16 is pulled towards the inside of the airbag 10 by the tether 50, whereby the airbag 10 becomes reduced in volume. Therefore, without using a high output inflator as the inflator 36, the airbag 10 can be inflated quickly in response to the gas from the inflator 36.

As mentioned above, the retainer 30 is disposed at the non-occupant side relative to the occupant-facing surface 1e of the steering wheel 1. This means that, when the airbag 10 is in an inflated state as shown in Fig. 2, the area of the rear panel 14 of the airbag 10 that is near the inflator-insertion opening 16 connected to the retainer 30 is located at the non-occupant side relative to the occupant-facing surface 1e of the steering wheel 1.

In this airbag 10, the tether 50 is connected to the area of the rear panel 14 near the inflator-insertion opening 16, namely, to an area to be located at the non-occupant side relative to the occupant-facing surface 1e of the steering wheel 1 when the airbag 10 become inflated. Therefore, an area of the airbag 10 to be located at the occupant side relative to the occupant-facing surface 1e of the steering wheel 1 at the time of inflation is not or hardly pulled towards the inside of the airbag 10 by the tether 50. This allows for volume reduction of the airbag 10 without reducing the size of the airbag 10 in the diameter direction of the steering wheel 1 when the airbag 10 is in its completely inflated state. Thus, the airbag 10 can be deployed quickly over a wide range.

In this embodiment, the tether 50, as shown in Fig. 1(b), is connected to sections of the rear panel 14 where the tether 50 overlaps the openings 1d of the steering wheel 1 when the airbag 10 is in its inflated state. This prevents the rear panel 14 from bulging outward of the airbag 10 by pushing itself into the openings 1d of the steering wheel 1 as the airbag 10 inflates, whereby the airbag 10 can be effectively reduced in volume.

Since the tether 50 is not connected to the front panel 12 of the airbag 10 in this embodiment, the front panel 12 can be entirely deployed quickly and substantially evenly towards the occupant side after the airbag 10 starts to inflate.

Although the tether 50 in this embodiment is formed by cutting a single foundation cloth substantially into a shape of a cross, the configuration of the tether is not limited. In the present invention, for example, the tether may be formed by, for example, connecting first ends of a plurality of half tethers to sections of the rear panel 14 that are near the inflator-insertion opening 16, and then connecting second ends of the half tethers to each other to link these sections of the rear panel 14 near the inflator-insertion opening 16 to each other.

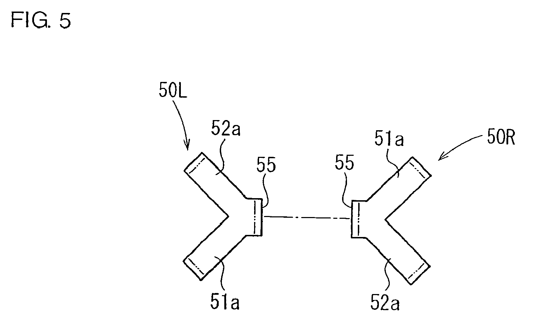

Fig. 5 is an exploded view showing an example of a tether having such a configuration.

In an embodiment shown in Fig. 5, a substantially cross-shaped tether is used, which is formed by connecting two substantially L-shaped half tethers 50L and 50R to each other. The two substantially L-shaped half tethers 50L and 50R are configured as if the tether 50 shown in Figs. 1 to 4 is divided in half into left and right segments.

Each of the half tethers 50L and 50R has a first-direction-extending segment 51a and a second-direction-extending segment 52a that extend crosswise in two directions. In this embodiment, a tab-like linking segment 55 protrudes from a junction between the extending segments 51a and 52a. In this embodiment, these half tethers 50L and 50R are two substantially L-shaped half tethers of the same configuration that are disposed inversely to each other in vertical and horizontal directions.

Although not shown, when manufacturing a driver-seat airbag in this embodiment, the tip ends of the extending segments 51a and 52a of the half tethers 50L and 50R are first sewn onto the corresponding planned tether sewing sections 54 of the rear panel 14. In this case, the linking segments 55 and 55 of the half tethers 50L and 50R are still maintained in an unconnected state.

Subsequently, the front panel 12 and the rear panel 14 are laid one of top of the other such that their to-be outer surfaces when an airbag will have been completed face each other. The peripheries of the front panel 12 and the rear panel 14 are then sewn to each other, thereby forming a bag. Then, the front panel 12 and the rear panel 14 are turned inside out through the inflator-insertion opening 16.

The linking segments 55 and 55 of the half tethers 50L and 50R are then sewn to each other through the opening 16, thereby connecting the half tethers 50L and 50R to each other. This forms a substantially cross-shaped tether similar to the tether 50 shown in Figs. 1 to 4, which links the sections of the rear panel 14 near the inflator-insertion opening 16 to each other.

As described above, the tether is constituted by a plurality of half tethers 50L and 50R. The half tethers 50L and 50R are individually sewn to the rear panel 14. After turning the front panel 12 and the rear panel 14 inside out, the half tethers 50L and 50R are connected to each other. Accordingly, a driver-seat airbag in which the sections of the rear panel 14 near the inflator-insertion opening 16 are linked to each other by a tether can be manufactured readily.

Alternatively, in the present invention, a cross-shaped tether may be formed by preliminarily sewing the linking segments 55 and 55 of the half tethers 50L and 50R to each other. In that case, the tip ends of the extending segments 51a and 52a may be connected to the rear panel 14 afterwards.

In the present invention, the configuration of the half tethers are not limited to that described above. For example, although not shown, a substantially cross-shaped tether can be formed by connecting four substantially linear half tethers to each other.

In the present invention, the shape of the tether is not limited to a substantially cross shape. In the present invention, the tether may extend linearly and have its opposite ends connected to the sections of the rear panel 14 near the inflator-insertion opening 16, or may extend radially in three directions or in five or more directions and have its tip ends in the radial direction connected to the sections of the rear panel 14 near the inflator-insertion opening 16.

In the present invention, a plurality of tethers may be provided in the airbag at different positions or different extending directions.

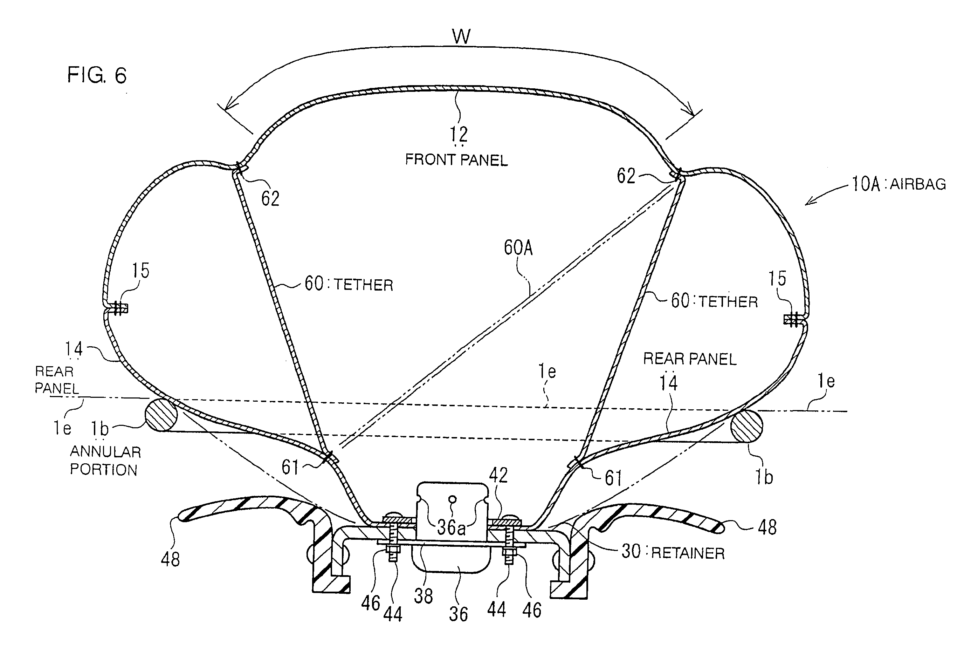

Fig. 6 is a cross-sectional view of a steering apparatus including a steering wheel equipped with a driver-seat airbag device having a driver-seat airbag according to another embodiment.

According to an airbag 10A of this embodiment, the airbag 10A contains therein tethers 60 that connect the sections of the rear panel 14 near the inflator-insertion opening 16 to the front panel 12. Reference numeral 61 denotes a seam at which one end of each tether 60 is sewn to the rear panel 14. Reference numeral 62 denotes a seam at which the other end of each tether 60 is sewn to the front panel 12.

In this embodiment, a plurality of tethers 60 is provided at different circumferential positions of the airbag 10A (the front panel 12 and the rear panel 14). Although Fig. 6 only shows two tethers 60, three or more tethers 60 may be provided. Although the tethers 60 in Fig. 6 connect the sections of the front panel 12 and the rear panel 14 that substantially face each other in the thickness direction of the airbag 10A, a tether 60A shown with a double-dotted chain line in Fig. 6 may be applied as an alternative, which connect sections of the front panel 12 and the rear panel 14 that are opposite each other across the center of the airbag 10A.

In the present invention, each tether 60 is preferably joined to the front panel 12 in an area outside a radius range W of 250 mm to 275 mm from the center of the front panel 12.

Other components of the airbag 10A are the same as those in the airbag 10 shown in Figs. 1 to 4. In Fig. 6, the reference numerals that are the same as those used in Figs. 1 to 4 indicate the same elements.

In this airbag 10A, the sections of the rear panel 14 near the inflator-insertion opening 16 and the front panel 12 are linked to each other by the tethers 60. Thus, when the airbag 10A inflates, these sections of the rear panel 14 and the front panel 12 are pulled towards the inside of the airbag 10A by the tethers 60, whereby the airbag 10A becomes reduced in volume. Therefore, without using a high output inflator as the inflator 36, the airbag 10A can be inflated quickly in response to the gas from the inflator 36.

Furthermore, in this airbag 10A, the tethers 60 are connected to the sections of the rear panel 14 near the inflator-insertion opening 16, namely, to sections to be located at the non-occupant side relative to the occupant-facing surface 1e of the steering wheel 1 when the airbag 10A becomes inflated. Therefore, the outer periphery of the rear panel 14, that is, the occupant side of the rear panel 14 relative to the occupant-facing surface 1e of the steering wheel 1, is not or hardly pulled towards the inside of the airbag 10A by the tethers 60. This allows for volume reduction of the airbag 10A without reducing the size of the airbag 10A in the diameter direction of the steering wheel 1 when the airbag 10A is in its completely inflated state. Thus, the airbag 10A can be deployed quickly over a wide range.

In this embodiment, although the rear panel 14 and the front panel 12 of the airbag 10A are linked to each other by the tethers 60, the tethers 60 are joined to the front panel 12 in an area outside the radius range W of 250 mm to 275 mm from the center of the front panel 12. Therefore, when the airbag 10A inflates, the wide range W surrounding the center of the front panel 12 can be deployed quickly and substantially evenly towards the occupant side without being restrained by the tethers 60.

The embodiments described above are examples of the present invention, and the present invention is not limited to these embodiments.

For example, although not shown, the tether may have one end connected to an area near the inflator-insertion opening of the rear panel of the airbag and the other end connected to the retainer of the airbag device.

In the present invention, the tether may be configured to have a function as a gas-flow-direction regulating member that receives gas from the inflator and regulates the flow of the gas in a predetermined direction.

## Claims

1. A driver-seat airbag having a front face (12) at an occupant side and a rear face (14) at a steering-wheel side,
wherein the rear face (14) has an inflator-insertion opening (16) in a central area thereof,
wherein a tether (50; 60; 60A) is connected to an area of the rear face (14) that is near the inflator-insertion opening (16), and
wherein when the airbag (10; 10A) inflates, the tether (50; 60; 60A) pulls a non-occupant side of the rear face (14), relative to an occupant-facing surface (1e) of the steering wheel (1), towards an inside of the airbag (10; 10A) so as to reduce a volume of the airbag (10; 10A).

2. The driver-seat airbag according to Claim 1, wherein the tether (50; 60; 60A) is connected to the rear face (14) within a radius range of 100 mm to 175 mm from an axis (1x) of the steering wheel (1) in the state where the airbag (10; 10A) is inflated.

3. The driver-seat airbag according to one of Claims 1 and 2, wherein the area of the rear face (14) to which the tether (50; 60A) is connected overlaps an opening (1d) of the steering wheel (1) in the state where the airbag (10; 10A) is inflated.

4. The driver-seat airbag according to any one of Claims 1 to 3, wherein the tether (50) links sections of the rear face (14) to each other, the sections of the rear face (14) being located at the non-occupant side relative to the occupant-facing surface (1e) of the steering wheel (1) in the state where the airbag (10) is inflated.

5. The driver-seat airbag according to Claim 4, wherein the tether (50) extends in a diameter direction of the steering wheel (1), and wherein a length L between opposite ends of the tether (50) is 30% to 70% of a distance D between a connection point between one of the opposite ends of the tether (50) and the rear face (14) and a connection point between the other one of the opposite ends of the tether (50) and the rear face (14) in a state where the rear face (14) is laid flat.

6. The driver-seat airbag according to one of Claims 4 and 5, wherein the tether (50) extends crosswise in two directions.

7. The driver-seat airbag according to any one of Claims 1 to 6, wherein the tether (60; 60A) links the front face (12) to the area of the rear face (14) that is to be located at the non-occupant side relative to the occupant-facing surface (1e) of the steering wheel (1) when the airbag (10) is inflated.

8. The driver-seat airbag according to Claim 7, wherein the tether (60; 60A) is connected to the front face (12) in an area outside a radius range W of 250 mm to 275 mm from a center of the front face (12).

9. A driver-seat airbag device comprising:
the driver-seat airbag (10) according to any one of Claims 1 to 8 in a folded state;
an airbag attachment member (30) to which a periphery of the inflator-insertion opening (16) in the rear face (14) of the driver-seat airbag (10) is attached;
an inflator (36) that inflates the driver-seat airbag (10); and
a module cover (48) that covers a folded body of the driver-seat airbag (10).

10. A steering apparatus including a steering wheel equipped with the driver-seat airbag device according to Claim 9,
wherein the airbag attachment member (30) is disposed at the non-occupant side relative to the occupant-facing surface (1e) of the steering wheel (1).
